# EUROPEAN PATENT APPLICATION

(11) **EP 1 524 756 A1**
(43) Date of publication of application: **20.04.2005**
(21) Application number: 03023816.6
(22) Date of filing: 18.10.2003
(51) Int. Cl.: H02K 49/10

(54) **Magnetic induction coupler**

(71) Applicant: Chang, Huang-Tung, Ho-Mei Town, Chang-Hua Hsien (TW)
(72) Inventor: Chang, Huang-Tung, Ho-Mei Town, Chang-Hua Hsien (TW)
(74) Representative: Helms, Joachim, Dipl.-Ing.

(57) **Abstract**

A magnetic induction coupler mainly comprises an outer wheel (60) having a conducting strip rotor (61) attached on its inner wall and a magnet stand (20) located within the outer wheel (60), both arranged coaxially on a shaft (10). A number of permanent magnets (21) are arranged around the outer wall of the magnet stand (20) to form a multipolar magnetic field. A number of conducting strips are circularly distributed on the conducting strip rotor (61) and electrically connected. The rotational motion of the outer wheel (60) is mechanically decoupled from the magnet stand (20) by two sets of bearings (41,52). To achieve relative motion between the outer wheel (60) and the magnet stand (20), a motor (M) is used to drive the outer wheel (60). As the outer wheel (60) rotates, an induction torque produced by an electric current induced in the conducting strip rotor (61) drives the shaft (10) to move accordingly. Further, the magnitude of the induction torque is proportional to the motor speed.

## Description

### FIELD OF THE INVENTION

The present invention relates to a magnetic induction coupler, and more particularly to a magnetic induction coupler that couples the motion between a wheel and a coaxial magnetic stand by utilizing the principle of magnetic induction.

### BACKGROUND OF THE INVENTION

The conventional damping devices in reciprocating machines utilize effects such as friction, oil pressure, eddy currents, and electricity generation. The damping mechanism that uses friction has drawbacks of material worn-out and load instability that prohibits precise damping control. The damping mechanism that uses oil pressure has drawbacks of oil leakage, noisiness, and abrupt load drop at high pressure. The damping mechanism that uses electricity generation has drawbacks of structural complexity and high cost. Damping mechanisms applying eddy currents can be categorized into that uses permanent magnets and that uses electromagnets. The former has a difficulty in connecting to external control signals that prohibits precise damping control. The latter allows convenient control of damping by external digital or analog signals that vary the magnetic field. But, it has drawbacks of small induction areas and magnetic leakage.

### SUMMARY OF THE INVENTION

Accordingly, the primary object of the present invention is to provide a magnetic induction coupler that can be used in a reciprocating exercise machine as a damping device. The magnitude of damping can be adjusted by varying the driving motor speed. It is a further object that a magnetic induction coupler according to the present invention can change the magnitude of damping by varying the induction area even under the condition of constant driving motor speed.

The various objects and advantages of the present invention will be more readily understood from the following detailed description when read in conjunction with the appended drawing.

### BRIEF DESCRIPTION OF THE DRAWINGS

Fig. 1 is an exploded view of a magnetic induction coupler according to the present invention.
Fig. 2 is a perspective view of a magnetic induction coupler according to the present invention.
Fig. 3 is a cross-sectional view of a magnetic induction coupler according to the present invention.
Fig. 4 is a perspective view of the first embodiment of the present invention used in an exercise machine.
Fig. 5 is an exploded view of the second embodiment of the present invention as a magnetic induction coupler with an adjustable magnetic stand.
Fig. 6 is a perspective view of the magnetic induction coupler with an adjustable magnetic stand illustrated in Fig. 5.
Fig. 7 is a cross-sectional view of the magnetic induction coupler with an adjustable magnetic stand illustrated in Fig. 6.
Fig. 8 is a cross-sectional view of the magnetic induction coupler illustrated in Fig. 7 with the magnetic stand being adjusted to a new location.

### DETAILED DESCRIPTION OF THE PREFERRED EMBODIMENTS

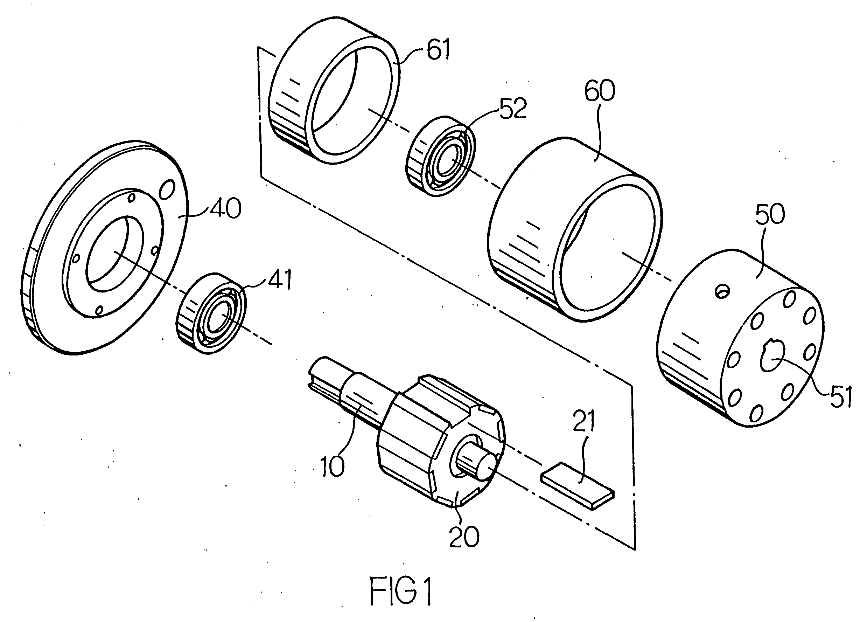

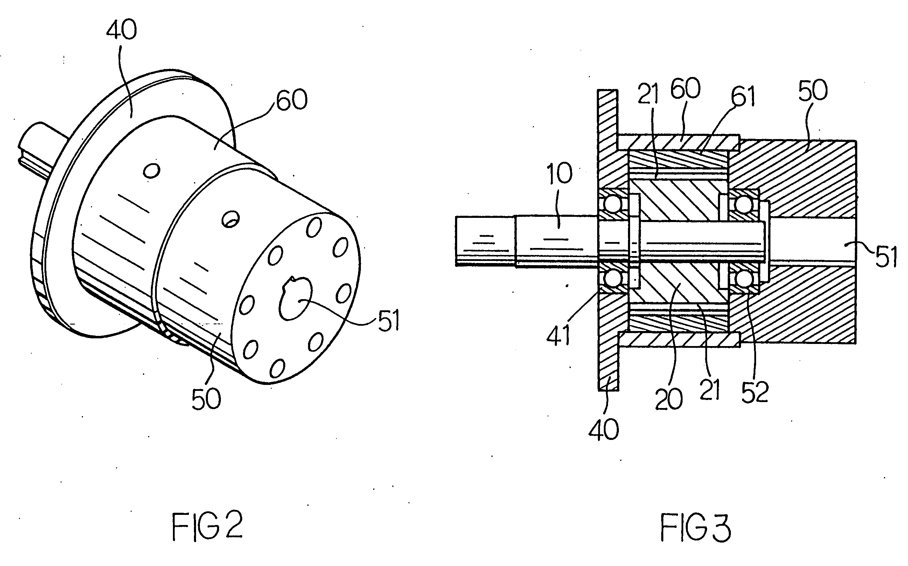

The structure of a magnetic induction coupler according to the present invention is illustrated in Fig. 1 to 4. The components of the magnetic induction coupler are arranged along a shaft 10. A magnet stand 20 is fixed at one end of the shaft 10, with the other end of the shaft 10 left for connecting a belt pulley 30. The magnet stand 20 is basically a cylindrical body having a number of permanent magnets 21 uniformly distributed around the outer wall. Further, these permanent magnets 21 are bipolar and placed with one of the magnetic poles facing down and another up, and adjacent magnets have opposite magnetic polarities. The magnet stand 20 is sandwiched by a bearing shell 40 and a motor connector 50. The outer wall of the magnet stand 20 is further covered with an outer wheel 60. Between the outer wheel 60 and the magnet stand 20, a conducting strip rotor 61 is firmly attached on the inner wall of the outer wheel 60, which has a number of conducting strips circularly arranged thereon and electrically connected. As shown in Fig. 3, the outer wheel 60 is locked with the bearing shell 40 and the motor connector 50, and the conducting strip rotor 61 attached on its inner wall is not in direct contact with the magnet stand 20. In the tiny space between the conducting strip rotor 61 and the magnet stand 20 is therefore filled with multipolar magnetic field. Two sets of bearings (41, 52) are set on the shaft 10, respectively supporting the bearing shell 40 and the motor connector 50. A shaft hole 51 in the motor connector 50 is used for receiving the extended shaft of a motor (M). The motor (M), with its extended shaft fixed into the shaft hole 51, drives the assembly of the motor connector 50, the outer wheel 60, and the bearing shell 40 into rotational motion. As the outer wheel 60 starts to rotate, the conducting strip rotor 61 on the inner wall thereof experiences varying magnetic field due to the initial relative motion with the magnet stand 20 and thus has electric currents induced in the conducting strip rotor 61. The magnetic torque thereby produced on the magnet stand 20 drives the magnet stand 20 to rotate with the outer wheel 60.

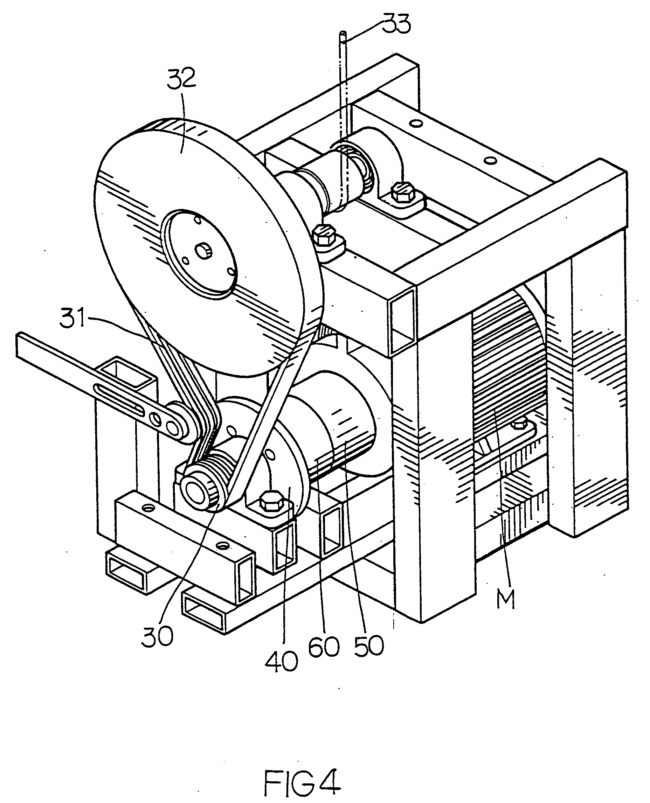

Fig. 4 shows a preferred embodiment of the magnetic induction coupler according to the present invention used in an exercise machine. It has a belt pulley 30 connected to the end of the shaft 10 opposite to the motor connector 50. The belt pulley 30 is coupled to a large belt pulley 32 with a belt 31. A string 33 is bound to the shaft of the large belt pulley 32 and wound thereon. The other end of the string is connected to a reciprocating exercise machine, such as a weight-lifting machine, a rowing machine, or a reciprocating back-muscle training machine. As the motor (M) drives the assembly of the motor connector 50, the outer wheel 60, and the bearing shell 40 into rotation, the conducting strip rotor 61 having an electric current induced therein applies a torque on the magnet stand 20. Therefore, the shaft 10 is inclined to rotate accordingly. To hold the shaft 10 fixed, a counter torque must be apply to balance the torque experienced by the magnet stand 20. Within a range of rotational speeds, the faster the motor rotates, the larger the torque experienced by the magnet stand 20. Therefore, changing the motor speed can vary the counter torque needed to stop the shaft 10. If one wants to rotate the shaft 10 opposite to the direction of motor motion by pulling the string 33, he or she has to apply an even larger torque to make the move. The drag experienced by a torque applier is called the effect of "magnetic damping", which can be used in an exercise machine for exercising muscles.

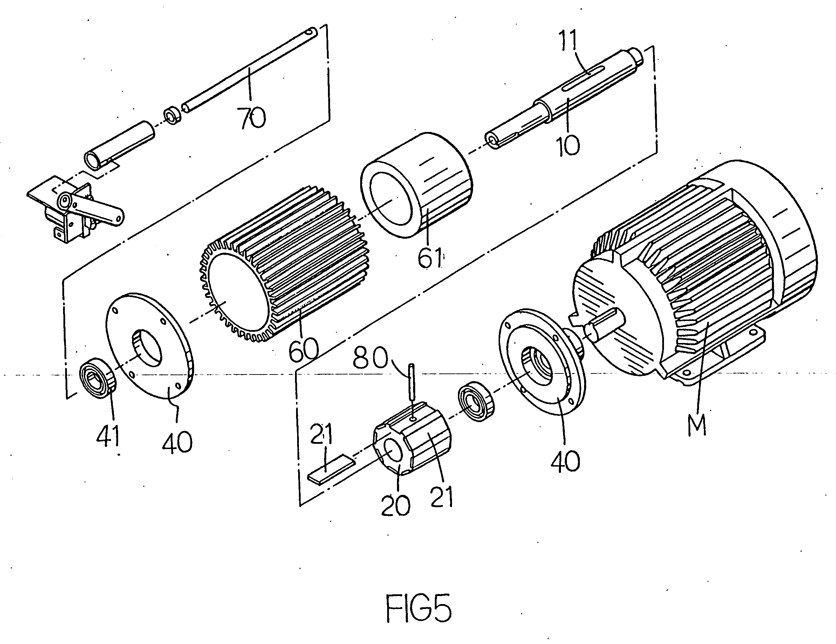

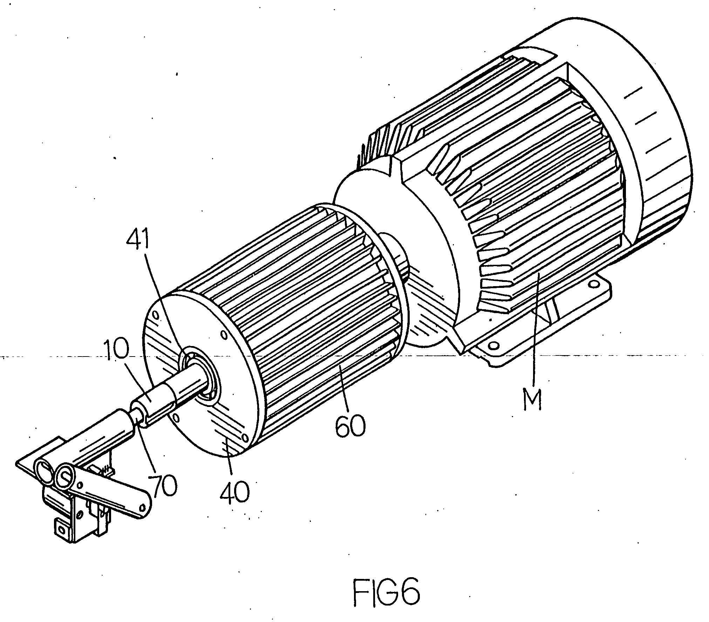

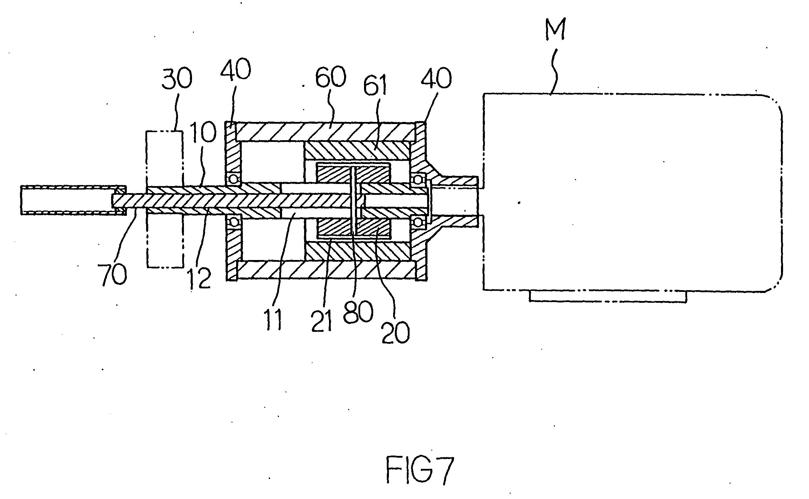

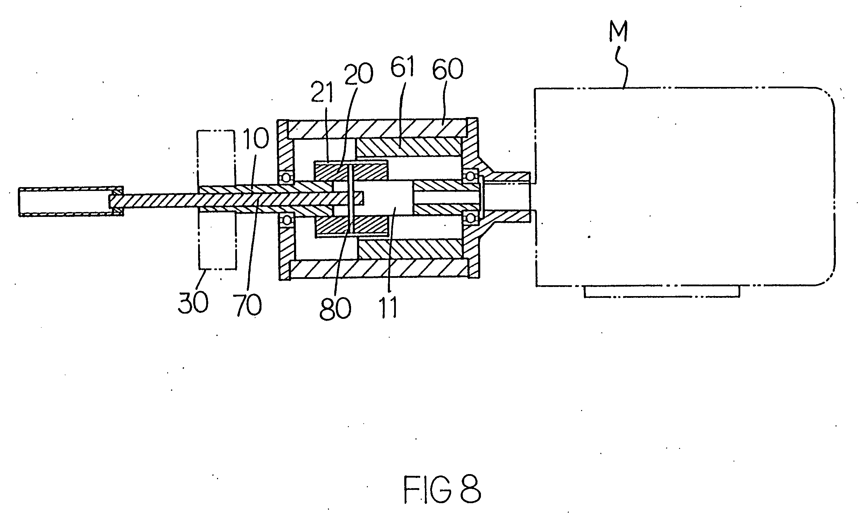

Fig. 5, 6, 7 and 8 illustrate the second embodiment of the present invention as a magnetic induction coupler with an adjustable magnetic stand. An outer wheel 60, sandwiched by two bearing shells 40, is fixed at the end of the motor shaft extended from a motor (M). A conducting strip rotor 61 is attached to the inner wall of the outer wheel 60. The conducting strip rotor 61 is generally shorter than the outer wheel 60 and is located near the end of the outer wheel 60 closer to the motor (M). The inner space of the conducting strip rotor 61 receives a magnet stand, which is basically a cylindrical body having a number of bipolar permanent magnets 21 uniformly distributed around the outer wall thereof. Further, these permanent magnets 21 are placed with one of the magnetic poles facing up and another down, and adjacent magnets have opposite magnetic polarity. A shaft 10 is inserted through the central hole of the magnet stand 20, with a length long enough to extend out of the bearing shell 40 on the side of the outer wheel 60 opposite to the motor (M). The extended portion of the shaft 10 is for connecting a belt pulley 30. A slot 11 is formed in the portion of the shaft 10 that the magnet stand 20 slips on. An axle 70 of a diameter smaller than that of the shaft 10 is inserted into an axial hole 12 of the shaft 10. The axle 70 can move axially within the shaft 10. The magnet stand 20 is fixed on the axle 70 by a pin 80 passing through the slot 11 on the shaft 10 and a hole at one end of the axle 70. Thereby, as the axle 70 moves in the axial direction, the magnet stand 20 moves accordingly. This achieves an effect of changing the overlapped area between the conducting strip rotor 61 and the magnet stand 20, as shown in Fig. 7 and 8. Based on the principle of magnetic induction, this mechanism of varying induction area can change the magnitude of magnetic damping even under the condition that the motor (M) maintains a uniform speed.

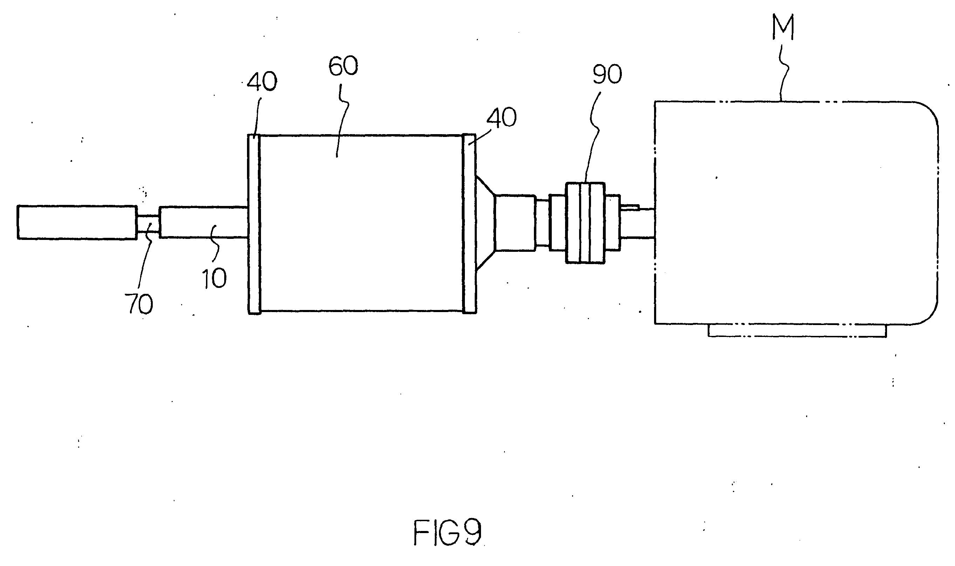

Referring to Fig. 9, to maintain the central axial line of the coupler to be at the same line with the motor (M) as it is connected to an output end of the twisting output end of the motor. A flexible shaft connector 90 is installed between the twisting output end of the motor (M) and the coupler. Similarly, when the magnetic sensing coupler is connected to the output shaft of the motor, the shaft connector 90 can be used to be connected between the coupler and the output shaft of the motor so as to retain in the same central line as the two are connected (since the magnetic induction coupler and the adjustable magnetic induction coupler can use the shaft connector as a calibrator as the two are connected to a motor. Thus, in above description, the adjustable magnetic induction coupler is used as an example).

To summarize, a magnetic induction coupler according to the present invention utilizes an outer wheel having a conducting strip rotor attached on its inner wall and a magnet stand located within the outer wheel, both arranged coaxially on a shaft. A number of permanent magnets are arranged circularly around the outer wall of the magnet stand to form a multipolar magnetic field. The conducting strip rotor has a number of conducting strips circularly arranged thereon and electrically connected. The rotational motion of the outer wheel is decoupled mechanically from the magnet stand by two sets of bearings. To achieve relative motion between the outer wheel and the magnet stand, a motor is connected to the outer wheel. Within a range of motor speeds, the magnet stand moves synchronically with the motor, driven by an induction torque produced by the electric currents induced in the conducting strip rotor.

The first embodiment of the magnetic induction coupler is utilized in an exercise machine. To stop the rotation of the magnet stand or even to reverse its rotational direction, an external torque for balancing the induction torque is needed. This is achieved by pulling a string wound around the shaft of a belt pulley, which pulley is connected to the shaft that the magnet stand rests on. For a person who provides an external torque, this mechanism becomes an exercise device. Further, changing the motor speed varies the induction torque, which fulfills a function of exercise strength adjustability.

The second embodiment of the magnetic induction coupler is a magnetic induction coupler with an adjustable magnetic stand. The main feature is that the location of the magnet stand is adjustable, which can substantially change the induction area between the outer wheel and the magnet stand. The change in the induction area in turn varies the induction torque experienced by the magnet stand. Thereby, even at a uniform motor speed, the output torque of the magnet stand is adjustable.

The present invention is thus described. It will be obvious that the same invention may be varied in many ways. Such variations are not to be regarded as a departure from the spirit and scope of the present invention, and all such modifications as would be obvious to one skilled in the art are intended to be included within the scope of the following claims.

## Claims

1. A magnetic induction coupler comprising
a shaft being a slender solid cylinder,
a magnet stand connected to an end of said shaft; a number of permanent magnets being embedded in an outer wall of said magnet stand and distributed in a circular fashion; said permanent magnets being bipolar and placed with one magnetic pole faced inwardly and the other magnetic pole faced outwardly; said permanent magnets reversing magnetic polarity one after another,
an outer wheel receiving said magnet stand and having a conducting strip rotor attached on an inner wall thereof; a number of conducting strips being circularly distributed on said conducting strip rotor and connected electrically,
a motor connector having one end fixed to said outer wheel and another end connected to a motor by receiving an extended shaft of said motor into a hole thereon, and
a bearing shell being firmly connected to an end of said outer wheel;
said motor driving said motor connector, said outer wheel, and said bearing shell together into rotational motion; said conducting strip rotor thereby rotating about said magnet stand to induce an electric current thereon; said magnet stand therefore experiencing a torque applied by said conducting strip rotor and being inclined to move with said outer wheel;
said torque experienced by said magnet stand being proportional to motor speed.

2. The magnetic induction coupler of claim 1, wherein a bearing set is embedded between said bearing shell and said shaft.

3. The magnetic induction coupler of claim 1, wherein a bearing set is embedded between said motor connector and said shaft.

4. A magnetic induction coupler with an adjustable magnet stand comprising a shaft being a slender hollow cylinder and having a slot formed at one end thereof,
a magnet stand being connected to said end of said shaft; a number of permanent magnets embedded in an outer wall of said magnet stand and distributed in a circular fashion; said permanent magnets being bipolar and placed with one magnetic pole facing inwardly and the other magnetic pole facing outwardly; said permanent magnets reversing magnetic polarity one after another,
an outer wheel receiving said magnet stand and having a conducting strip rotor attached on an inner wall thereof; a number of conducting strips being circularly distributed on said conducting strip rotor and connected electrically,
two bearing shells sandwiching said outer wheel to form an integral body;
said integral body coupled with an extended shaft of a motor, and
an axle having a portion inserted into said shaft; a hole being formed at the end of said inserted portion; said magnet stand being locked on said shaft by inserting a pin into said magnet stand, passing through said slot on said shaft and said hole at said end of said axle;
said axle moving axially to change an overlapped area between said conducting strip rotor and said magnet stand; a change in said overlapped area varying said torque experienced by said magnet stand.

5. The magnetic induction coupler with an adjustable magnet stand of claim 4, wherein positions of said conducting strip rotor and said magnet stand are interchangeable.

## Amended claims

### Amended claims in accordance with Rule 86(2) EPC.

**1.** A magnetic induction coupler with an adjustable magnet stand comprising a shaft being a slender hollow cylinder and having a slot formed at one end thereof, a magnet stand being connected to said end of said shaft; a number of permanent magnets embedded in an outer wall of said magnet stand and distributed in a circular fashion; said permanent magnets being bipolar and placed with one magnetic pole facing inwardly and the other magnetic pole facing outwardly; said permanent magnets reversing magnetic polarity one after another, an outer wheel receiving said magnet stand and having a conducting strip rotor attached on an inner wall thereof; a number of conducting strips being circularly distributed on said conducting strip rotor and connected electrically, two bearing shells sandwiching said outer wheel to form an integral body; said integral body coupled with an extended shaft of a motor, and an axle having a portion inserted into said shaft; a hole being formed at the end of said inserted portion; said magnet stand being locked on said shaft by inserting a pin into said magnet stand, passing through said slot on said shaft and said hole at said end of said axle; said axle moving axially to change an overlapped area between said conducting strip rotor and said magnet stand; a change in said overlapped area varying said torque experienced by said magnet stand.

**2.** The magnetic induction couplers with an adjustable magnet stand of claim 1, wherein positions of said conducting strip rotor and said magnet stand are interchangeable.
